# EUROPEAN PATENT SPECIFICATION

(11) **EP 1 834 987 B1**
(45) Date of publication and mention of the grant of the patent: **12.08.2015**
(21) Application number: 06005311.3
(22) Date of filing: 15.03.2006
(51) Int. Cl.: C08L 23/08, C08L 23/10, C08L 51/00

(54) **Method for the production of a polypropylene composition with selective cross-linkable dispersed phase**
Verfahren zur Herstellung einer Polypropylenzusammensetzung mit selektiver vernetzbarer dispergierter Phase.
Procédé de production d'une composition à base de polypropylène ayant une phase dispersée selectivement réticulable

(43) Date of publication of application: 19.09.2007
(73) Proprietor: Borealis Technology Oy, 06101 Porvoo (FI)
(72) Inventor: Pham, Tung, 88527 Unlingen (DE); Gahleitner, Markus, 4501 Neuhofen/ Krems (AT)
(74) Representative: Kador & Partner

(56) References cited:
- US-A- 4 413 066
- US-A1- 2003 050 401
- US-B1- 6 455 637

## Description

The present invention relates to a method for the production of a a heterophasic polypropylene composition comprising a selective cross-linkable dispersed phase, and their use in different applications such as moulding applications, films, wires and cables or pipes.

Due to their chemical and thermal resistance as well as mechanical strength polypropylenes are used in different applications such as moulding applications, films, wires and cables or pipes.

It is known that cross-linking of a composition based on polypropylene improves the mechanical strength and chemical heat resistance of the composition. EP 1 354 901 provides a cross-linked heterophasic polypropylene composition with an improved impact strength. The cross-linking reaction is carried out by using an organic peroxide.

However, conventional cross-linking mechanisms for heterophasic polypropylenes based on radical reactions are not selective to any of the components of the polyolefin and result necessarily in a degradative damage of the heterophasic polypropylene components, limiting the final mechanical performance, especially the toughness, of the material.

It is also a well known process to produce cross-linked polyolefins using a vinyl silane onto an olefin homo- or copolymer such as described in US 3,646,155. Alternatively, the vinyl silane may be copolymerised directly with olefin monomers as described in US 4,413,066. However, these methods requires a free-radical generator to initiate the grafting reaction and thus polypropylene is also unsuited to this method of cross-linking.

US 6, 455,637 US 2003/0050401 describes a heterophasic polypropylene composition, which is suitable for cross-linking reaction and wherein a silane-groups containing polyolefin is blended with a polypropylene. However, the described cross-linking reaction must be carried out under a humidity of 90 to 100 % and at temperature of 85°C. These reaction conditions negatively influence the molecular structure of the polypropylene composition and thus the good mechanical properties of the composition and will accelerate physical and chemical ageing including post-crystallisation. It is well known for these processes to limit the toughness of materials.

Considering the above-mentioned disadvantages, object of the present invention is to provide a cross-linked polypropylene composition having a high impact strength and wherein the cross-linking reaction of the polypropylene composition does not lead to negative side effects, which result in a degradative damage of the polypropylene composition and thus to a loss of the good mechanical properties of the cross-linked heterophasic polypropylene composition.

The present invention is based on the finding that the above object can be achieved if the cross-linking reaction of the heterophasic polypropylene is selective and is carried out after the dispersion of a cross-linkable polyolefin in the polypropylene composition.

Therefore, the present invention provides a method for the production of a granulated and a cross-linked heterophasic polypropylene composition according to claims 1 to 9 comprising
- a propylene homo- or copolymer (A) as matrix phase and
- polyolefin (B), which is selectively cross-linked, dispersed in the matrix phase (A),
wherein the process comprises the following steps:
i. blending (A) and (B), which comprises hydrolysable silane-groups, together with a silanol condensation catalyst,
ii. granulation of the blend of step (i) in a water bath, and afterwards
iii. selectively cross-linking of the polyolefin (B) the heterophasic polypropylene composition at 10 to 40 °C under a humidity of below 85 % to a cross-linking degree of at least 30 %, based on the total polyolefin (B).

The selective cross-linking of the polyolefin phase allows stabilizing of the phase morphology of the heterophasic polypropylene composition without the above mentioned negative side effects. The resulting inventive compositions are additionally characterised by high heat deflection temperatures and improved scratch resistance resulting from the continuous matrix phase as well as reduced shrinkage and improved surface quality resulting from the crosslinked polyolefin phase.

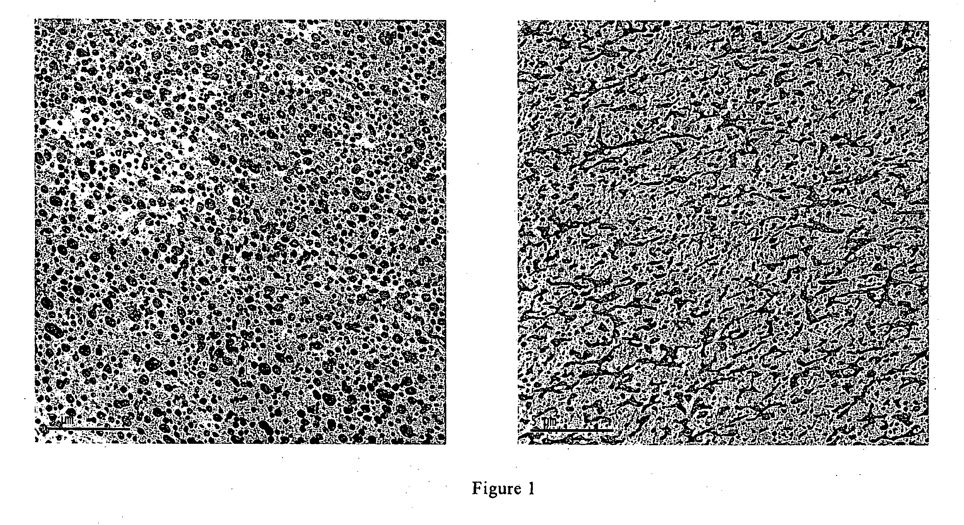

Fig. 1: TEM view of compositions based on polypropylene random copolymer RA130E with 25 wt% silane-crosslinked polyethylene (left, Visico LE4481 with CAT-MB50, example 10) and 25% non-crosslinked LDPE (right, Himod FT7239, comparative example 10); transmission electron micrographs after contrasting with RuO₄; scale bar length 5 µm.

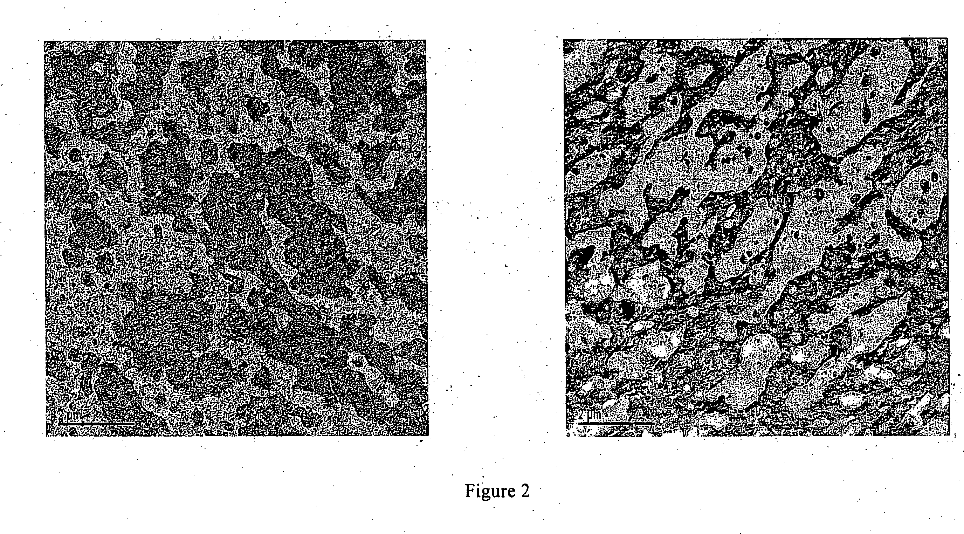

Fig. 2: TEM view of compositions based on polypropylene random copolymer RA130E with 50 wt% silane-crosslinked polyethylene (left, Borealis ME 2510 with CAT-MB50) and 50% non-crosslinked polyethylene (right, Borealis RM7402); transmission electron micrographs after contrasting with RuO₄; scale bar length 2 µm.

In the present invention propylene homo- or copolymer (A) is preferably used in an amount of 45 to 95 wt%, more preferably of 50 to 90 wt% and most preferably of 55 to 85 wt% based on the total heterophasic polypropylene composition.

The propylene homo- or copolymer (A) may be produced by single- or multistage process polymerisation of propylene or propylene and alphaolefin and/or ethylene such as bulk polymerisation, gas phase polymerisation, slurry polymerisation, solution polymerisation or combinations thereof using conventional catalysts. A homo- or copolymer can be made either in loop reactors or in a combination of loop and gas phase reactors. Those processes are well known to one skilled in the art. A suitable catalyst for the polymerisation of the propylene polymer is any stereospecific catalyst for propylene polymerisation which is capable of polymerising and copolymerising propylene and comonomers at a temperature of 40 to 110 °C and at a pressure from 10 to 100 bar. Ziegler Natta catalysts as well as metallocene catalysts are suitable catalysts.

The polyolefin (B) of the inventive heterophasic polypropylene composition is preferably used in an amount of 5 to 55 wt%, more preferably in an amount of 10 to 50 wt% and most preferably in an amount of 15 to 45 wt%, based on the total heterophasic polypropylene composition.

Preferably the weight ratio of homo- or copolymer (A) to polyolefin (B) is from 95: 5 to 45:55.

Furthermore, polyolefin (B) is dispersed in the matrix phase (A) and comprises hydrolysable silane-groups.

The hydrolysable silane-groups can be introduced e.g. by grafting the silane compound into the polyolefin or by copolymerisation of the olefin monomers and silane-groups containing monomers. Such techniques are known e.g. from US 4,413,066, US 4,297,310, US 4,351,876, US 4,397,981, US 4,446,283 and US 4,456,704.

In the case the silane-group containing polyolefin (B) has been obtained by copolymerisation, the copolymerisation is preferably carried out with an unsaturated silane compound represented by the formula

R¹SiR² _{q}Y_{3-q} (IV)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

Special examples of the unsaturated silane compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group.

A preferred unsaturated silane compound is represented by the formula

CH₂=CHSi(OA)₃

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, and vinyl triacetoxysilane.

The copolymerisation of the olefin and the unsaturated silane compound may be carried out under any suitable conditions resulting in the copolymerisation of the two monomers.

Moreover, the copolymerisation may be implemented in the presence of one or more other comonomers which can be copolymerised with the two monomers. Such comonomers include (a) vinyl carboxylate esters, such as vinyl acetate and vinyl pivalate, (b) alpha-olefins, such as propene, 1-butene, 1-hexane, 1-octene and 4-methyl-l-pentene, (c) (meth)acrylates, such as methyl(meth)acrylate, ethyl(meth)acrylate and butyl(meth)acrylate, (d) olefinically unsaturated carboxylic acids, such as (meth)acrylic acid, maleic acid and fumaric acid, (e) (meth)acrylic acid derivativs, such as (meth)acrylonitrile and (meth)acrylic amide, (f) vinyl ethers, such as vinyl methyl ether and vinyl phenyl ether, and (g) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)-acrylate, are preferred.

Especially preferred comonomers are butyl acrylate, ethyl acrylate and methyl acrylate.

Two or more such olefinically unsaturated compounds may be used in combination. The term "(meth)acrylic acid" is intended to embrace both acrylic acid and methacrylic acid. The comonomer content of the copolymer may amount to 70 wt% of the copolymer, preferably about 0.5 to 35 wt%, most preferably about 1 to 30 wt%.

The grafted polyolefin (B) may be produced e.g. by any of the two methods described in US 3,646,155 and US 4,117,195, respectively.

The silane-groups containing polyolefin (B) according to the invention preferably comprises 0.1 to about 10 wt% of the silane compound, more preferably 0.5 to 7 wt%, most preferably 1.0 to 4 wt% by weight, based on the total polyolefin (B).

Preferably, the amount of the silane groups is from 0.1 to about 50 wt%, based on the total polyolefin (B).

The silanol content can be adjusted by blending the grafted or copolymerised polyolefin with a non-modified polyolefin.

If the silane-groups are introduced in the polyolefin (B) by polymerisation, as described above, it is preferred that the silane-group containing polyolefin (B) has a density of 900 to 940 kg/m³, more preferred of 910 to 935 kg/m³, most preferred of 915 to 930 kg/m³.

Furthermore, it is preferred that the silane-grafted polyolefin (B) has a density of 920 to 960 kg/m³, more preferred of 925 to 955 kg/m³, most preferred of 930 to 950 kg/m³.

Moreover, the used polyolefin (B) of the invention preferably is an ethylene homo- or copolymer as a high density polyethylene, low density polyethylene, linear low density polyethylene.

The cross-linking reaction can be carried out by any known silane condensation catalyst. However, it is preferred that the silane condensation catalyst is typically selected from the group comprising Lewis acids, inorganic acids such as sulphuric acid and hydrochloric acid, and organic acids such as citric acid, stearic acid, acetic acid, sulphonic acid and alkanoic acids as dodecanoic acid, organic bases, carboxylic acids and organometallic compounds including organic titanates and complexes or carboxylates of lead, cobalt, iron, nickel, zinc and tin or a precursor of any of the compounds mentioned.

Furthermore, it is preferred that the silanol condensation catalyst is preferably presented in an amount of 0.0001 to 6 wt%, more preferably of 0.001 to 2 wt%, and most preferably 0.05 to 1 wt%.

Moreover, the heterophasic polypropylene composition according to the invention may further contain various additives, such as miscible thermoplastics, further stabilizers, lubricants, fillers, colouring agents and foaming agents, which can be added before during or after the blending step (i) to the composition.

In the present invention the compounds (A) and (B) are blended together with the silanol condensation catalyst. It is preferred that the silanol condensation catalyst and compound (A) are preferably added to the silane group containing polyolefin (B) by compounding a master batch, which contains the silanol condensation catalyst and the propylene homo- or copolymer (A) in a polymer matrix in concentrated form, with the silane - group containing polyolefin (B).

Alternately the final composition can also be produced by blending a higher concentration than the final target concentration of (B) together with (A) and the silanol condensation catalyst, the resulting composition being further diluted with (A) to the target concentration of (B).

Furthermore, the blending step of the present invention can be carried out by any suitable method known in the art, but preferably in a twin screw extruder with two high intensity mixing segments and preferably at a temperature of 180 to 230 °C, more preferably of 185 to 225 °C, and at a throughput of 10 to 15 kg/h and a screw speed of 50 to 70 rpm.

After the compounds are blended, as described above, the melt blend is cooled in a water bath, whereby the residence time preferably is less than 120 seconds, more preferably less than 60 seconds, to solidify the blend before granulation. Alternately the granulation can be carried out directly in the water bath, in which case the residence time of the granules in the water before separation and drying preferably is less than 240 seconds, more preferably less than 120 seconds. Optionally, the resulted compound may be stored at ambient temperature of 5 to 50 °C, preferably 10 to 40 °C, and normal humidity.

Normal humidity means in this connection a humidity of 40-85 % relative.

In the present invention after the granulation of the blend, the selective cross-linking reaction follows at temperature of 5 to 50 °C, more preferably of 10 to 40 °C and a humidity below 85 %, more preferably below 75 %.

The cross-linking degree is determined via the xylene hot insolubles fraction of the heterophasic polypropylene composition, and is more than 30 %, more preferably more than 40 %, of the total content of the polyolefin (B).

According to the present invention the obtained cross-linked heterophasic polypropylene composition preferably has a Charpy notched impact strength, according to ISO 179 leA, at + 23 °C of at least 8.0 kJ/m², more preferably of at least 18 kJ/m² and at -20 °C of at least 1.5 kJ/m², more preferably of at least at least 2.5 kJ/m².

As demonstrated in Figure 1 and 2 the cross-linked heterophasic polypropylene composition obtained by the above described method has a continuous polypropylene matrix, even in that case the polyolefin fraction is presented in a high amount and has, as desired, a high impact strength.

The cross-linked heterophasic polypropylene composition can be used in different applications, like moulding applications, films, wires, fibres and cables or pipes.

### Examples

### 1. Definitions

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR₂ of polypropylene is determined at a temperature of 230 °C and a load of 2.16 kg, the MFR₅ of polyethylene is measured at a temperature 190 °C and a load of 5 kg and the MFR₂ of polyethylene at a temperature 190 °C and a load of 2.16 kg.

### b) Xylene insolubles

The content of xylene hot insolubles is determined by extracting 1 g of finely cut polymer sample with 500 ml xylene in a Soxleth extractor for 48 hours at the boiling temperature. The remaining solid amount is dried at 90 °C and weighed for determining the insolubles amount.

### c) Charpy notched impact test

The impact strength is determined as Charpy Impact Strength according to ISO 179 1 eA at +23°C and at -20 °C on injection moulded specimens of 80x10x4 mm³.

### d) HDT

The heat distortion temperature is determined according to ISO 75 on injection moulded specimens of 80x10x4 mm³.

### e) Tensile test

Tensile tests are performed according to ISO 527-3 using injection moulded specimen as described in EN ISO 1873-2 (dog bone shape, 4 mm thickness).

Tensile modulus (E-modulus) was also determined according to ISO 527-3 and calculated from the linear part of the tensile test results.

### f) Flexural Modulus

The flexural modulus is measured according ISO 178.

### g) Density

The density is measured according to ISO 1183.

### 2. Examples

The components - propylene homo- or copolymer, polyethyelene-vinylsilane-copolymer or grafting product and the catalyst master batch (Borealis polyethylene CAT-MB50 with dibutyltin dilaurate as catalytically active substance), were combined in a twin screw extruder (PRISM TSE24, L/D ratio 40) with two high intensity mixing segments at temperatures between 190 and 220°C at a through put off of 10 km/h and a cruse speed of 50 rpm. The material was extruded to two circular dies of 3mm diameter into water base with a residence time of at least 30 sec for solidifying the melt standard, which was consequently granulated. For the period until melt processing, the resulting compound was stored at an ambient temperature of + 23 ± 2 °C and normal humidity (50 ± 5%).

### Compounds:

All used polymers are commercially available by Borealis Technology Oy:
- RA130E is a propylene-ethylene random copolymer for pipe extrusion with MFR (230°C/2.16kg) of 0.25 g / 10 min, an ethylene content of 4.5 wt% and a density of 0.905 g/cm³.
- BA110CF is a heterophasic propylene-ethylene impact copolymer for cast and blown film extrusion with MFR (230°C/2.16kg) of 0.85 g / 10 min, an ethylene content of 8 wt% and a density of 0.910 g/cm³.
- RD208CF is a propylene-ethylene random copolymer for cast film extrusion with MFR (230°C/2.16kg) of 8 g / 10 min , an ethylene content of 6 wt% and a density of 0.905 g/cm³.
- BorPEX ME2510 is a silane-grafted medium density polyethylene for pipe extrusion with MFR (190°C/2.16kg) of 1.0 g / 10 min , a silanol content of 2 wt% and a density of 0.935 g/cm³.
- BorPEX HE2515 is a silane-grafted high density polyethylene for pipe extrusion with MFR (190°C/2.16kg) of 1,0 g / 10 min and a silanol content of 2 wt%.
- Borecene RM7402 is a metallocene-based medium density polyethylene for rotomoulding with MFR (190°C/2.16kg) of 4 g / 10 min and a density of 0.940 g/cm³.
- MG7547 is a high density polyethylene for injection moulding with MFR (190°C/2.16kg) of 4 g / 10 min and a density of 0.954 g/cm³.
- Visico LE4481 is a high-pressure low density PE copolymer with a vinyl silane for cable insulation with MFR (190°C/2.16kg) of 5 g / 10 min , a silanol content of 1,75 wt% and a density of 0.927 g/cm³.
- Himod FT7294 is a high-pressure low density polyethylene for film blowing extrusion with MFR (190°C/2.16kg) of 4 g / 10 min and a density of 0.929 g/cm³.

### Example 1:

95 wt% RA130E as matrix phase, 4.75 wt% ME2510 as silane-grafted polyethylene and 0.25 wt% catalyst master batch CAT-MB50 are used.

### Example 2:

90 wt% RA130 E as matrix phase, 9,5 wt% ME2510 as silane-grafted polyethylene and 0.5 wt% catalyst master batch CAT-MB50 are used.

### Example 3:

75 wt% RA130 E as matrix phase, 23.75 wt% ME2510 as silane-grafted polyethylene and 1.25 wt% catalyst master batch CAT-MB50 are used.

### Example 4:

70 wt% RA130 E as matrix phase, 28.5 wt% ME2510 as silane-grafted polyethylene and 1.5 wt% catalyst master batch CAT-MB50 are used.

### Example 5:

70 wt% RA130 E as matrix phase, 28.5 wt% HE2515 as silane-grafted polyethylene and 1,5 wt% catalyst master batch CAT-MB50 are used.

### Example 6:

75 wt% BA110CF as matrix phase, 23.5 wt% HE2515 as silane-grafted polyethylene and 1.25 wt% catalyst master batch CAT-MB50 are used.

### Example 7:

90 wt% RD208CF as matrix phase, 9.5 wt% LE4481 as silane-copolymerised polyethylene 0,5 wt% catalyst master batch CAT-MB50 are used.

### Example 8:

75 wt% RD208CF as matrix phase, 23.75 wt% LE4481 as silane-copolymerised polyethylene and 1.25 wt% catalyst master batch CAT-MB50 are used.

### Example 9:

50 wt% RD208CF as matrix phase, 47.5 wt% LE4481 as silane-copolymerised polyethylene and 2.5 wt% catalyst master batch CAT-MB50 are used.

### Example 10:

75 wt% RA130E as matrix phase, 23.75 wt% LE4481 as silane-copolymerised polyethylene and 1.25 wt% catalyst master batch CAT-MB50 are used.

### Comparative Example 1:

Only RA130E is used.

### Comparative Example 2:

75 wt% RA130E as matrix phase and 25 wt% of the high density polyethylene MG7547 are used.

### Comparative Example 3:

70 wt% RA130E, as matrix phase and 30 wt% MG7547, a high density polyethylene, are used.

### Comparative Example 4:

70 wt% RA130E as matrix phase and 30 wt% RM7402, a medium density polyethylene, are used.

### Comparative Example 5:

Only BA110CF is used.

### Comparative Example 6:

75 wt% BA110CF as matrix phase and 25 wt% MG7547, a high density polyethylene, are used.

### Comparative Example 7:

Only RD208CF is used.

### Comparative Example 8:

75 wt% RD208CF as matrix phase and 25 wt% FT7239, a low density polyethylene, are used.

### Comparative Example 9:

Only RA130E is used.

### Comparative Example 10 :

75 wt% RA130E as matrix phase and 25 wt% FT7239, a low density polyethylene, are used.

**Table 1: Experimental results**

| **Example (EX) and Comparative Example (CE)** | **Matrix Phase Polymer** | **Polyolefin (B)** | **Polyolefin (B)** | **Xylene insoluble** | **Cross-linking degree** | **Tensile test** | | | | | **Flexural Modulus** | **Charpy notched impact test** | | **HDT** |
|---|---|---|---|---|---|---|---|---|---|---|---|---|---|---|
| | **-** | **-** | **wt%** | **wt%** | **%** | **Modulus MPa** | **Stress at Yield MPa** | **Strain at Yield %** | **Stress at Break MPa** | **Strain at Break %** | **Modulus MPa** | **+ 23°C kJ/m²** | **-20°C kJ/m²** | **°C** |
| **EX 1** | RA130E | ME2510 | 5 | 3,1 | 61,2 | 821 | 26 | 14,3 | 27,8 | 395 | 809 | 21,9 | 1,9 | 65 |
| **EX 2** | RA130E | ME2510 | 10 | 6,2 | 62,0 | 802 | 25,1 | 15 | 22,6 | 330 | 774 | 32,8 | 1,9 | 69 |
| **EX 3** | RA130E | ME2510 | 25 | 12,4 | 49,6 | 721 | 23,2 | 16,5 | 21,5 | 279 | 713 | 41,8 | 3,2 | 68 |
| **EX 4** | RA130E | ME2510 | 30 | 15,1 | 50,3 | 698 | - | - | 32,0 | 489 | 658 | 91,7 | 3,6 | 67 |
| **EX 5** | RA130E | HE2515 | 30 | 17,7 | 59,0 | 751 | 24,1 | 15,0 | 30,9 | 465 | 763 | 88,3 | 3,5 | 68 |
| **EX 6** | BA110CF | HE2515 | 25 | 15,7 | 62,9 | 1068 | 25,3 | 12,1 | 17,4 | 129 | 1057 | 75,3 | 5 | 74 |
| **EX 7** | RD208CF | LE4481 | 10 | 0,8 | 82,0 | 603 | 19,2 | 14,4 | 26,0 | 582 | 630 | 8,2 | 1,9 | 59 |
| **EX 8** | RD208CF | LE4481 | 25 | 10,8 | 43,3 | 482 | 16,1 | 16,1 | 25,3 | 724 | 492 | 19,2 | 2,0 | 55 |
| **EX 9** | RD208CF | LE4481 | 50 | 22,2 | 44,4 | 310 | 11,9 | 23,9 | 20,3 | 531 | 302 | 53,8 | 4,9 | 48 |
| **EX 10** | RA130E | LE4481 | 25 | 14,5 | 58,0 | 540 | 18,9 | 19,5 | 30,1 | 580 | 555 | 79,5 | 5,8 | 59 |
| **CE 1** | RA130E | none | 0 | 0,0 | 0,0 | 890 | 24,5 | 12,8 | 31,2 | 320 | 820 | 19,5 | 2 | 65 |
| **CE2** | RA130E | MG7547 | 25 | 0,1 | 0,4 | 854 | 24,5 | 13,5 | 11,8 | 374 | 836 | 14,3 | 1,1 | 69 |
| **CE 3** | RA130E | MG7547 | 30 | 0,1 | 0,3 | 776 | 23 | 14,3 | 28,9 | 550 | 795 | 20,1 | 1,8 | 68 |
| **CE 4** | RA130E | RM7402 | 30 | 0,1 | 0,3 | 776 | 23 | 14,3 | 28,9 | 550 | 746 | 20,1 | 1,8 | 65 |
| **CE 5** | BA110CF | none | 0 | 0,0 | 0,0 | 1190 | 22,1 | 17,9 | 22,3 | 105 | 1100 | 35,0 | 3,8 | 73 |
| **CE 6** | BA110CF | MG7547 | 25 | 0,2 | 0,8 | 1164 | 25,9 | 13,5 | 21,7 | 370 | 1091 | 42,3 | 3,6 | 76 |
| **CE 7** | RD208CF | - | 0 | 0,0 | 0,0 | 656 | - | - | 27,1 | 452 | 680 | 6,2 | 1,2 | 60 |
| **CE 8** | RD208CF | FT7293 | 25 | 0,3 | 1,2 | 624 | 19,4 | 14,3 | 16,1 | 383 | 622 | 6,5 | 1,0 | 59 |
| **CE 9** | RA130E | - | 0 | 0,0 | 0,0 | 890 | 24,5 | 12,8 | 31,2 | 320 | 820 | 19 | 2 | 65 |
| **CE 10** | RA130E | FT7293 | 25 | 0,2 | 0,9 | 635 | 20,5 | 17,0 | 12,0 | 333 | 646 | 42,8 | 1,2 | 61 |

## Claims

1. A method for the production of a granulated and cross-linked heterophasic polypropylene composition comprising
- a propylene homo- or copolymer (A) as matrix phase and
- polyolefin (B), which is selectively cross-linked, dispersed in the matrix phase (A),
wherein the process comprises the following steps:
i. blending (A) and (B), wherein (B) comprises hydrolysable silane-groups, together with a silanol condensation catalyst,
ii. granulation of the blend of step (i) in a water bath, and afterwards
iii. selectively cross-linking of the polyolefin (B) in the heterophasic polypropylene composition at 10 to 40 °C under a humidity of below 85% to a cross-linking degree of at least 30 %, based on the total polyolefin (B).

2. The method for the production of a granulated and cross-linked heterophasic polypropylene composition according to claim 1, wherein the weight ratio of homo- or copolymer (A) to polyolefin (B) is from 95:5 to 45:55.

3. The method for the production of a granulated and cross-linked heterophasic polypropylene composition according to any of the preceding claims, wherein polyolefin (B) is an ethylene homo- or copolymer.

4. The method for the production of a granulated and cross-linked heterophasic polypropylene composition according to any of the preceding claims wherein the amount of the silane groups is from 0.1 to about 50 wt%, based on the total polyolefin (B).

5. The method for the production of a granulated and cross-linked heterophasic polypropylene composition according to any of the preceding claims wherein silane-grafted polyolefin (B) has a density of 920 to 960 kg/m³, measured according to ISO 1183.

6. The method for the production of a granulated and cross-linked heterophasic polypropylene composition according to any of the claims 1 to 4 wherein polyolefin (B) is obtained by a polymerisation of olefin monomers and silane group containing monomers and has a density of 900 to 940 kg/m³, measured according to ISO 1183.

7. The method for the production of a granulated and cross-linked heterophasic polypropylene composition according to any of the preceding claims wherein step (i) is carried out at a temperature of 180 to 230 °C.

8. The method for the production of a granulated and cross-linked heterophasic polypropylene composition according to any of the preceding claims wherein for granulation the residence time of the blend of step (i) in the water bath is less than 240 seconds.

9. The method for the production of a granulated and cross-linked heterophasic polypropylene composition according to any of the preceding claims wherein the composition has an impact strength at + 23 °C of at least 8.0 kJ/m² and at -20 °C of at least 1.5 kJ/m², in a Charpy notched test according to ISO 179 leA.

10. Use of the granulated and cross-linked heterophasic polypropylene composition obtained by the method of claims 1 to 9 for pipe, wire and cable, film, fibre or moulding application.

11. An article made of the granulated and cross-linked heterophasic polypropylene composition obtained by the method of claims 1 to 9.

## Patentansprüche

1. Verfahren zur Herstellung einer granulierten und vernetzten heterophasischen Polypropylenzusammensetzung, umfassend
- ein Propylenhomo- oder -copolymer (A) als Matrixphase und
- ein Polyolefin (B), das selektiv vernetzt und in der Matrixphase (A) dispergiert ist,
wobei das Verfahren die folgenden Schritte umfasst:
i. Mischen von (A) und (B), wobei (B) hydrolysierbare Silangruppen umfasst, zusammen mit einem Silanolkondensationskatalysator,
ii. Granulation von der Mischung aus dem Schritt (i) in einem Wasserbad, und danach
iii. selektives Vernetzen von dem Polyolefin (B) in der heterophasischen Polypropylenzusammensetzung bei 10 bis 40 °C und einer Humidität von unter 85 % auf einen Vernetzungsgrand von mindestens 30 %, basierend auf dem gesamten Polyolefin (B).

2. Verfahren zur Herstellung einer granulierten und vernetzten heterophasischen Polypropylenzusammensetzung nach Anspruch 1, wobei das Gewichtsverhältnis von dem Homo- oder Copolymer (A) zu dem Polyolefin (B) 95 : 5 bis 45 : 55 ist.

3. Verfahren zur Herstellung einer granulierten und vernetzten heterophasischen Polypropylenzusammensetzung nach einem der vorhergehenden Ansprüche, wobei das Polyolefin (B) ein Ethylenhomo- oder -copolymer ist.

4. Verfahren zur Herstellung einer granulierten und vernetzten heterophasischen Polypropylenzusammensetzung nach einem der vorhergehenden Ansprüche, wobei die Menge an den Silangruppen 0,1 bis etwa 50 Gew.-% ist, basierend auf dem gesamten Polyolefin (B).

5. Verfahren zur Herstellung einer granulierten und vernetzten heterophasischen Polypropylenzusammensetzung nach einem der vorhergehenden Ansprüche, wobei das silangepfropfte Polyolefin (B) eine Dichte von 920 bis 960 kg/m³ hat, gemessen gemäß ISO 1183.

6. Verfahren zur Herstellung einer granulierten und vernetzten heterophasischen Polypropylenzusammensetzung nach einem der Ansprüche 1 bis 4, wobei das Polyolefin (B) durch eine Polymerisation von Olefinmonomeren und silangruppenhaltigen Monomeren erhalten wird und es eine Dichte von 900 bis 940 kg/m³ hat, gemessen gemäß ISO 1183.

7. Verfahren zur Herstellung einer granulierten und vernetzten heterophasischen Polypropylenzusammensetzung nach einem der vorhergehenden Ansprüche, wobei der Schritt (i) bei einer Temperatur von 180 bis 230 °C durchgeführt wird.

8. Verfahren zur Herstellung einer granulierten und vernetzten heterophasischen Polypropylenzusammensetzung nach einem der vorhergehenden Ansprüche, wobei für die Granulation eine Verweilzeit von der Mischung aus dem Schritt (i) in dem Wasserbad kürzer als 240 Sekunden ist.

9. Verfahren zur Herstellung einer granulierten und vernetzten heterophasischen Polypropylenzusammensetzung nach einem der vorhergehenden Ansprüche, wobei die Zusammensetzung in einem Charpy-Kerbtest gemäß ISO 179 1eA eine Schlagzähigkeit bei +23 °C von mindestens 8,0 kJ/m² und bei -20 °C von mindestens 1,5 kJ/m² hat.

10. Verwendung der granulierten und vernetzten heterophasischen Polypropylenzusammensetzung, die durch das Verfahren nach einem der Ansprüche 1 bis 9 erhalten wird, für eine Rohr-, Draht-und-Kabel-, Folien-, Faser- oder Formungsanwendung.

11. Artikel, der aus der granulierten und vernetzten heterophasischen Polypropylenzusammensetzung hergestellt ist, die durch das Verfahren nach einem der Ansprüche 1 bis 9 erhalten wird.

## Revendications

1. Procédé de production d'une composition de polypropylène hétérophasique granulée et réticulée comprenant
- un homo- ou copolymère de propylène (A) en tant que phase de matrice et
- une polyoléfine (B), qui est sélectivement réticulée, dispersée dans la phase de matrice (A),
le procédé comprenant les étapes suivantes :
i. mélange de (A) et (B), où (B) comprend des groupes silane hydrolysables, conjointement avec un catalyseur de condensation de silanol,
ii. granulation du mélange de l'étape (i) dans un bain d'eau, et ensuite
iii. réticulation sélective de la polyoléfine (B) dans la composition de polypropylène hétérophasique à 10 à 40 °C sous une humidité inférieure à 85 % à un degré de réticulation d'au moins 30 %, sur la base de la polyoléfine totale (B).

2. Procédé pour la production d'une composition de polypropylène hétérophasique granulée et réticulée selon la revendication 1, dans lequel le rapport en poids de l'homo- ou copolymère (A) à la polyoléfine (B) est de 95:5 à 45:55.

3. Procédé de production d'une composition de polypropylène hétérophasique granulée et réticulée selon l'une quelconque des revendications précédentes, dans lequel la polyoléfine (B) est un homo- ou copolymère d'éthylène.

4. Procédé de production d'une composition de polypropylène hétérophasique granulée et réticulée selon l'une quelconque des revendications précédentes dans lequel la quantité des groupes silane est de 0,1 à environ 50 % en poids, sur la base de la polyoléfine totale (B).

5. Procédé de production d'une composition de polypropylène hétérophasique granulée et réticulée selon l'une quelconque des revendications précédentes dans lequel la polyoléfine à greffage de silane (B) a une masse volumique de 920 à 960 kg/m³, mesurée selon l'ISO 1183.

6. Procédé de production d'une composition de polypropylène hétérophasique granulée et réticulée selon l'une quelconque des revendications 1 à 4 dans lequel la polyoléfine (B) est obtenue par une polymérisation de monomères d'oléfine et de monomères contenant des groupes silane et a une masse volumique de 900 à 940 kg/m³, mesurée selon l'ISO 1183.

7. Procédé de production d'une composition de polypropylène hétérophasique granulée et réticulée selon l'une quelconque des revendications précédentes dans lequel l'étape (i) est conduite à une température de 180 à 230 °C.

8. Procédé de production d'une composition de polypropylène hétérophasique granulée et réticulée selon l'une quelconque des revendications précédentes dans lequel, pour la granulation, le temps de séjour du mélange de l'étape (i) dans le bain d'eau est inférieur à 240 secondes.

9. Procédé de production d'une composition de polypropylène hétérophasique granulée et réticulée selon l'une quelconque des revendications précédentes dans lequel la composition a une résistance aux chocs à +23 °C d'au moins 8,0 kJ/m² et à -20 °C d'au moins 1,5 kJ/m², dans un essai à encoche de Charpy selon l'ISO 179 leA.

10. Utilisation de la composition de polypropylène hétérophasique granulée et réticulée obtenue par le procédé des revendications 1 à 9 pour une application de tuyau, de câble, de film, de fibre ou de moulage.

11. Article fabriqué à partir de la composition de polypropylène hétérophasique granulée et réticulée obtenue par le procédé des revendications 1 à 9.
